# EUROPEAN PATENT APPLICATION

(11) **EP 3 958 582 A2**
(43) Date of publication of application: **23.02.2022**
(21) Application number: 21204069.5
(22) Date of filing: 21.10.2021
(51) Int. Cl.: H04N 21/81, H04N 21/231, H04N 21/233, H04N 21/433, H04N 21/414, H04N 21/4335

(54) **VOICE INTERACTION METHOD, VOICE INTERACTION SYSTEM AND STORAGE MEDIUM**

(30) Priority: 22.06.2021 CN 202110690436
(71) Applicant: Guangzhou Xiaopeng Motors Technology Co., Ltd., Guangzhou, Guangdong 510000 (CN)
(72) Inventor: GUO, Huapeng, Guangzhou (CN)
(74) Representative: Ran, Handong

(57) **Abstract**

A voice interaction method, voice interaction system and storage medium are provided. The voice interaction method includes: receiving a voice request of a user and performing natural language understanding on the voice request to obtain corresponding text data; obtaining response text data based on the text data, and searching sequentially a cache of a vehicle terminal and a cache of a server for a corresponding response audio file based on the response text data; and playing found audio file by the vehicle terminal. With the voice interaction method, a multi-level cache strategy where a search is first conducted in the vehicle terminal and then in the server is employed, which enables a faster obtainment of an audio file and reduced audio playback delay. The present invention achieves a balance between low cost and fast audio playback, thereby bringing a smoother playback experience to users.

## Description

### Field of Invention

The invention relates to voice technology field, and in particular, to a voice interaction method, voice interaction system and storage medium.

### Background

Vehicle terminals have quite different commonly used response commands as users' driving habits vary. A single cache may be at risk of failure or loss. In case of a cache failure or loss, a third party service may be requested, which can result in heavy traffic or high audio playback latency, affecting the human-machine interaction experience. Moreover, frequent use of third party services may result in increased costs.

### Summary of Invention

A voice interaction method, voice interaction system and storage medium are provided according to embodiments of the present invention.

In accordance with the present invention, a voice interaction method includes:
receiving a voice request of a user and performing natural language understanding on the voice request to obtain corresponding text data;
obtaining response text data based on the text data, and searching sequentially a cache of an vehicle terminal and a cache of a server for a corresponding response audio file based on the response text data; and
playing found audio file by the vehicle terminal.

Obtaining response text data based on the text data, and searching sequentially a cache of an vehicle terminal and a cache of a server for a corresponding response audio file based on the response text data, comprises:
first searching a preset cache of the vehicle terminal based on the response text data; and
then searching a first-level cache of the vehicle terminal when the audio file is not found in the preset cache of the vehicle terminal.

The voice interaction method comprises:
executing a cache eviction policy when the first-level cache of the vehicle terminal stores data for a specified time period.

The voice interaction method comprises:
storing the found audio file into the first-level cache of the vehicle terminal when the audio file is not present in the first-level cache of the vehicle terminal.

Obtaining response text data based on the text data, and searching sequentially a cache of a vehicle terminal and a cache of a server for a corresponding response audio file based on the response text data, comprises:
first searching a second-level cache of the server when the audio file is not found in the vehicle terminal; and
then searching a third-level cache of the server when the audio file is not found in the second-level cache of the server.

Obtaining response text data based on the text data, and searching sequentially a cache of a vehicle terminal and a cache of a server for a corresponding response audio file based on the response text data, comprises:
searching then a dynamic cache of the server when the audio file is not found in the third-level cache of the server.

The server comprises a first server and a second server, wherein the first server comprises the second-level cache and the third-level cache; and the second server comprises the dynamic cache.

The voice interaction method comprises:
executing a cache eviction policy when the second-level cache of the server stores data for a specified time period.

The voice interaction method comprises:
storing the found audio file into the second-level cache and/or the third-level cache of the server when the audio file is not present in the second-level cache and/or the third-level cache of the server.

In accordance with the present invention, a voice interaction system includes:
an understanding module configured to receive a voice request of a user and perform natural language understanding on the voice request to obtain corresponding text data;
a search module configured to obtain response text data based on the text data, and search sequentially a cache of a vehicle terminal and a cache of a server for a corresponding response audio file based on the response text data; and
a playback module configured to play the found audio file by the vehicle terminal.

An embodiment of the present invention provides a computer-readable storage medium having stored thereon a computer program that, when executed by a processor, implements any of the embodiments of the voice interaction method.

With the voice interaction method, voice interaction system and computer-readable storage medium described above, a multi-level cache strategy where a search is first conducted in the vehicle terminal and then in the server is employed, which enables a faster obtainment of an audio file and reduced audio playback delay. The present invention achieves a balance between low cost and fast audio playback, thereby bringing a smoother playback experience to users.

Additional aspects and advantages of the present invention will be set forth in the description below, and will become apparent from the description, or can be understood by practice of the present invention.

### Brief Description of Drawings

The above and/or additional aspects and advantages of the present invention will become apparent and readily understood from the following description of the embodiments in connection with the accompanying drawings, in which:
FIG. 1 is a flow chart of a voice interaction method according to the present invention;
FIG. 2 is a block diagram of a voice interaction system according to the present invention;
FIG. 3 is another block diagram of a voice interaction system according to the present invention;
FIG. 4 is yet another block diagram of a voice interaction system according to the present invention.
FIG. 5 is still another block diagram of a voice interaction system according to the present invention;
FIG. 6 is a schematic diagram of an application scenario of a voice interaction method according to the present invention;
FIG. 7 is still another block diagram of a voice interaction system according to the present invention.

### Detailed Description

The embodiments of the present invention will be described in detail below, examples of which are illustrated in the accompanying drawings, in which like or similar numerals denote like or similar elements or elements having like or similar functions throughout. The embodiments described below with reference to the drawings are illustrative only and are not to be construed as limiting the present invention.

In the description of the embodiments of the present invention, the terms "first", "second" and the like are used for illustration purposes only, and are not to be construed as indicating or implying relative importance or implying the number of technical features following these terms. Accordingly, a feature following a term like "first" or "second" may comprise one or more of such features either explicitly or implicitly. In the description of the embodiments of the present invention, unless specifically indicated, the term "a plurality of' or "multiple" means two or more.

The term "cloud" is used in the specification to mean cloud servers or other virtual computing facilities on the cloud. The term "server" may include dedicated servers or similar computing facilities at particular physical locations.

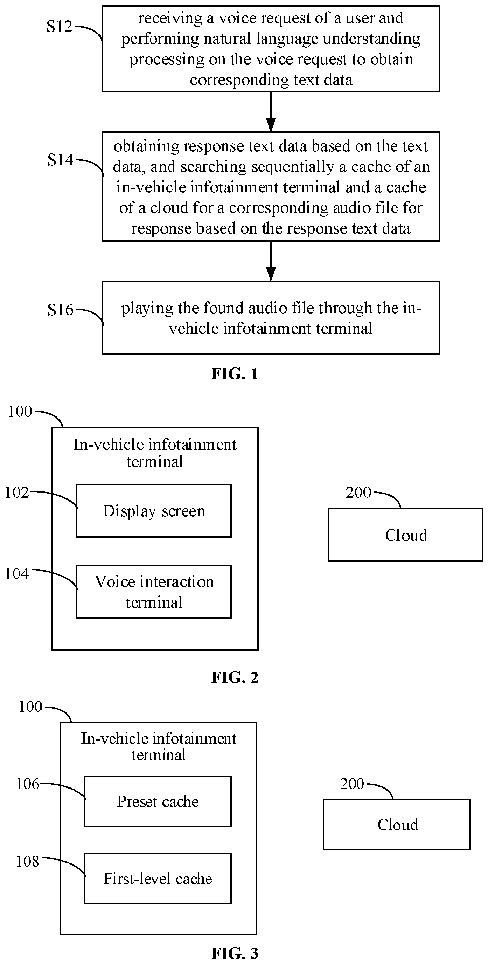

Referring to FIG. 1 and FIG. 2, the present invention provides a voice interaction method, which includes:
step S12, receiving a voice request of a user and performing natural language understanding on the voice request to obtain corresponding text data;
step S14, obtaining response text data based on the text data, and searching sequentially a cache of a vehicle terminal 100 and a cache of a cloud or a server 200 for a corresponding response audio file based on the response text data; and
step S16, playing found audio file by the vehicle terminal 100.

With the voice interaction method, a multi-level cache strategy where a search is first conducted in the vehicle terminal 100 and then in the cloud or server 200 is employed, which enables a faster obtainment of an audio file and reduced audio playback delay. The present invention achieves a balance between low cost and fast audio playback, thereby bringing a smoother playback experience to users.

Specifically, in step S12, the voice request may be from the vehicle terminal 100 or may be from a mobile terminal that communicates with the vehicle terminal. The vehicle terminal 100 may be mounted on the vehicle. The vehicle includes, but not limited to, a fuel vehicle, extended-range electric vehicle, electric vehicle, hybrid vehicle, hydrogen energy vehicle, and the like. The mobile terminal includes, but are not limited to, cell phone, tablet computer, wearable smart device, laptop computer, or the like. The cloud or server 200 may be in wired or wireless connection with the vehicle for data and signal transmission. The wireless connection includes, but not limited to, WIFI, a mobile communication network, etc. The mobile communication network may include mobile communication means, such as 4G, 5G, and 6G.

The vehicle terminal 100 may comprise a display screen 102 and a voice interaction terminal 104.

The display screen 102 is configured to display a graphical user interface, such as a control panel interface, a navigation interface, a music interface. The display screen 102 may be a touch display screen 102. In addition to displaying a graphical user interface associated with the vehicle terminal 100, the display screen 204 also provides means for user input. A user inputs a command by touching an associated key on the touch display screen 102 or by inputting an associated gesture. The display screen 102 may include at least one of a central control display screen, an instrument display screen, and a passenger seat display screen, and an entertainment screen on the back of the driver seat and the passenger seat of the vehicle. The user may input a relevant command through a key on the vehicle or through a voice, to have the desired graphical user interface to be displayed.

The voice interaction terminal 104 is configured to collect user's voice requests and play audio files. For example, the voice interaction terminal 104 may have a microphone and a speaker. The voice interaction terminal 104 collects a user's voice request through the microphone and transmits it to the cloud or server 200. The cloud or server 200 performs natural language understanding on the voice request to obtain a corresponding operation instruction and text data. The cloud or server 200 sends the operation instruction and the text data to the voice interaction terminal 104, such that the voice interaction terminal 104 controls the vehicle to perform a corresponding operation(s).

In step S14, after the text data is obtained, the vehicle terminal 100 can obtain the response text data using the TTS (Text To Speech) technique, and search for the corresponding response audio file (i.e., a playback source) in a local cache based on response text data. After the corresponding response audio file is found, the vehicle terminal 100 directly plays the audio file. This reduces the audio playback delay and thus improves user experience, and requires no third party service for online synthesis and thus reduces costs.

The voice request may be converted into the text data using related techniques, which will not be explained in detail herein. For example, the voice request of "open the window" is converted into the text data of "open the window".

With reference to FIG. 3, the step S14 includes:
first searching a preset cache 106 of the vehicle terminal 100 based on the response text data; and
then searching a first-level cache 108 of the vehicle terminal 100 when the audio file is not found in the preset cache 106 of the vehicle terminal 100.

As such, a two-level cache strategy can be achieved at the vehicle terminal 100.

Specifically, after the response text data is obtained, the vehicle terminal 100 first searches the preset cache 106 of the vehicle terminal 100 based on the text content. If a corresponding audio file is found, no further search is required and this processing ends.

When the audio file is not found in the preset cache 106 of the vehicle terminal 100, the vehicle terminal 100 then searches the first-level cache 108 of the vehicle terminal 100. After the corresponding response audio file is found, no further search is required and this processing ends.

The vehicle terminal 100 plays the found audio file to perform interaction with the user.

The preset cache 106 of the vehicle terminal 100 stores audio files that are often used for response in the in-vehicle infotainment interaction, i.e., frequently used audio files, to maximize the response speed of the in-vehicle infotainment and increase the audio playback speed. For example, commonly used responses include: "okay", "I don't understand", "would you say it in another way?", "the first route has been chosen for you", etc. Audio files corresponding to the responses are thus stored into the preset cache 106. Generally, the number of and the audio content of the audio files stored in the preset cache 106 will not change. Of course, it is also possible to update the number of and the audio content of the audio files stored in the preset cache 106 of the vehicle terminal 100 during an OTA (online upgrade) process.

The first-level cache 108 of the vehicle terminal 100 stores TTS response audio files required for each vehicle owner's driving habits based on the eviction policy and the capacity of the vehicle terminal 100. The longer the vehicle is used, the more robust the first-level cache 108 will be, that is, the more audio files stored in the first-level cache 108 will be. Both the preset cache 106 and the first-level cache 108 of the vehicle terminal 100 are limited by the capacity of the vehicle terminal 100. Therefore, a corresponding cache eviction policy is required, and the cloud or server 200 is required to provide support for more data. The cache eviction policy for the preset cache 106 of the vehicle terminal 100 may be implemented through OTA, and the audio files of the preset cache 106 that need to be updated are obtained through big data analysis of the cloud or server 200.

Specifically, the voice interaction method comprises:
executing a cache eviction policy when the first-level cache 108 of the vehicle terminal 100 stores data for a specified time period. In this way, the first-level cache 108 of the vehicle terminal 100 can be enabled to dynamically store audio files.

In particular, the capacity of the vehicle terminal 100 is generally static. The first-level cache 108 may be a dynamic cache 206, which dynamically stores audio files transmitted from the cloud or server 200. If the capacity allocated to the first-level cache 108 has been used up, the vehicle terminal 100 cannot update the audio files stored in the first-level cache 108. Therefore, the cache eviction policy is executed when the first-level cache 108 of the vehicle terminal 100 stores data for a specified time period, which enables the first-level cache 108 of the vehicle terminal 100 to store audio files transmitted from the cloud or server 200.

In an example, the specified time period may be 7 days. When the first-level cache 108 of the vehicle terminal 100 stores data for 7 days, that is, on the eighth day, the cache eviction policy is executed to delete audio files of the previous 7 days. It will be appreciated that the specified time period may also be, for example, 3 days, 7 days, 10 days, which is not limited herein.

The voice interaction method comprises storing the found audio file into the first-level cache 108 of the vehicle terminal 100 when the audio file is not present in the first-level cache 108 of the vehicle terminal 100.

In this way, audio files that are not in the first-level cache 108 of the vehicle terminal 100 can be backfilled to the first-level cache 108 of the vehicle terminal 100. When an audio file is subsequently needed, it can be read directly locally to reduce audio playback latency, thereby bringing a smoother playback experience to the user.

Specifically, when the first-level cache 108 of the vehicle terminal 100 does not have a corresponding response audio file, a search is conducted in the cloud or server 200 based on the response text data. After the corresponding response audio file is found, the cloud or server 200 transmits this audio file to the vehicle terminal 100, and the vehicle terminal 100 plays this audio file. The vehicle terminal 100 can backfill the found audio file to the first-level cache 108 of the vehicle terminal 100.

The backfilling can be performed in an asynchronous fashion. That is, the vehicle terminal 100 can have two processes, one of which may be referred to as a main process. In the main process, after obtaining the corresponding response audio file from the cloud or server 200, the vehicle terminal 100 plays the audio file. In the other process, the vehicle terminal 100 stores the audio file received from the cloud or server 200 into the first-level cache 108 of the vehicle terminal 100. The two processes will not affect each other, and there are no specific restrictions on the timing or ordering between the two processes.

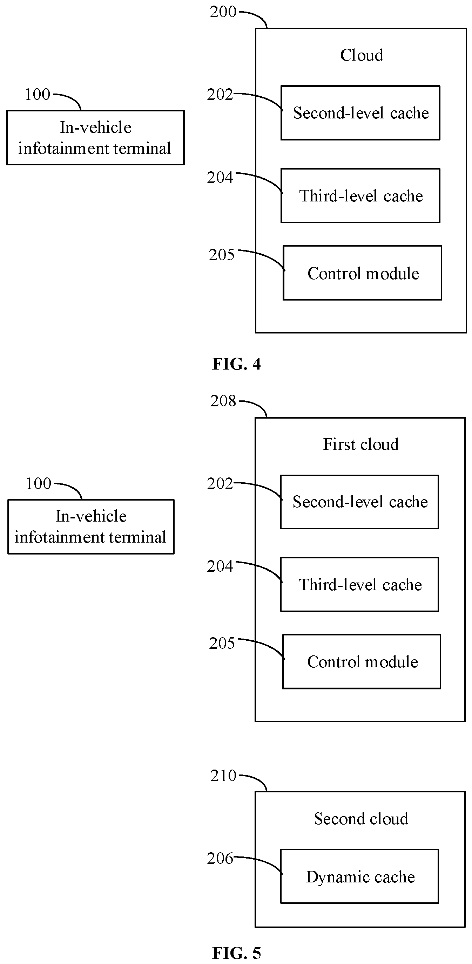

With reference to FIG. 4, the step S14 includes:
first searching a second-level cache 202 of the cloud or server 200 when the audio file is not found in the vehicle terminal 100; and
then searching a third-level cache 204 of the cloud or server 200 when the audio file is not found in the second-level cache 202 of the cloud or server 200.

As such, a two-level cache strategy can be achieved at the cloud or server 200.

Specifically, the cloud or server may include a control module 205 connected to the second-level cache 202 and the third-level cache 204. When the vehicle terminal 100 does not find the corresponding response audio file, the control module 205 searches for the corresponding response audio file based on the response text data using the TTS technique. The control module 205 is configured to first search the second-level cache 202 for the audio file; and transmit the audio file to the vehicle terminal 100 after finding the corresponding audio file, to cause the vehicle terminal 100 to play the audio file. In transmission, the control module 205 may transmit a byte stream corresponding to the audio file. After the byte stream transmitted from the cloud or server 200 is received, the vehicle terminal 100 converts the byte stream into the audio file, and performs local dynamic storage in the first-level cache 108 of the vehicle terminal 100.

When the corresponding response audio file is not found in the second-level cache 202 of the cloud or server 200, the control module 205 searches the third-level cache 204 of the cloud or server 200. After the corresponding response audio file is found, the audio file is transmitted to vehicle terminal 100 for playback. In the transmission, the cloud or server 200 transmits a byte stream corresponding to the audio file. After the byte stream transmitted from the cloud or server 200 is received, the vehicle terminal 100 converts the byte stream into the audio file, and performs local dynamic storage in the first-level cache 108 of the vehicle terminal 100.

The control module 250 can be further configured to maintain an update policy or policies for the second-level cache 202 and the third-level cache 204.

It should be noted, after the vehicle terminal 100 receives the first frame data of the audio file transmitted from the cloud or server 200, the vehicle terminal 100 can utilize the first frame data for playback without waiting for the transmission of the byte stream of the entire audio file to be completed. This can further reduce audio playback delay and improve user experience. The length of the first frame data may be set by the system by default, or may be set by users, which is not limited herein. During the playback of the first frame data, the vehicle terminal 100 continues to receive the byte stream of the audio file sent from the cloud or server 200. Upon completion of the playback of the first frame data, the vehicle terminal 100 plays the next frame of data to complete the playback of the entire audio file.

The vehicle terminal 100 plays the found audio file to perform interaction with the user.

The second-level cache 202 of the cloud or server 200 may be a high-performance cache (such as a high-performance cache container). In the event that the vehicle terminal 100 does not have the corresponding response audio file (i.e., there is no hit), when the service request reaches the cloud or server 200, use of a high-performance cache container enables the cloud or server to response to the vehicle terminal 100 as quickly as possible. Moreover, the second-level cache 202 would employ cache eviction policies to provide high performance and control the cost to a certain level.

The voice interaction method comprises executing a cache eviction policy when the second-level cache 202 of the cloud or server 200 stores data for a specified time period.

In this way, the second-level cache 202 of the cloud or server 200 can be enabled to dynamically store audio files.

In particular, the capacity allocated by the cloud or server 200 to the second-level cache 202 is generally static. The second-level cache 202 stores audio files found by the cloud or server 200. If the capacity allocated to the second-level cache 202 has been used up, the cloud or server 200 cannot update the audio files stored in the second-level cache 202. Therefore, the cache eviction policy is executed when the second-level cache 202 of the cloud or server 200 stores data for a specified time period, which enables the second-level cache 202 of the cloud or server 200 to store the latest audio files.

In an example, the specified time period may be 7 days. When the second-level cache 202 of the cloud or server 200 stores data for 7 days, that is, on the eighth day, the cache eviction policy is executed to delete audio files of the previous 7 days. It will be appreciated that the specified time period may also be, for example, 3 days, 7 days, 10 days, which is not limited herein. In addition, the cycle of executing the cache eviction policy on the second-level cache 202 may or may not be the same as the cycle of executing the cache eviction policy on the first-level cache 108, which is not limited herein.

The third-level cache 204 of the cloud or server 200 may be a high reliability cache. The second-level cache 202 may fail or be abnormal. As a secondary solution for the second-level cache 202, a storage medium with higher reliability is used, which has a certain loss in performance but is relatively cheap in cost than the second-level cache 202. For a reliable storage medium, a cache eviction policy is not required.

The step S14 includes: searching then a dynamic cache 206 of the cloud or server 200 when the audio file is not found in the third-level cache 204 of the cloud or server 200. Thus, a three-level cache strategy can be achieved at the cloud or server 200.

Specifically, in the event that the corresponding response audio file is found in none of the preceding caches (i.e., a miss), the three-level cache 204 of the cloud or server 200 may be provided as an emergency solution.

Specifically, with reference to FIG. 5, the cloud or server 200 includes a first cloud or server 208 and a second cloud or server 210. The first cloud or server 208 includes a control module 205, a second-level cache 202 and a third-level cache 204. The second cloud or server 210 includes a dynamic cache 206. The first cloud or server 208 may be a cloud server of a vehicle manufacturer, and the second cloud or server 210 may be a cloud server of a third party service provider. The third party service provider may provide an online synthesis service, so that the vehicle terminal 100 can play the corresponding response audio file.

The voice interaction method comprises storing the found audio file into the second-level cache 202 and/or the third-level cache 204 of the cloud or server 200 when the audio file is not present in the second-level cache 202 and/or the third-level cache 204 of the cloud or server 200.

In this way, audio files that are not in the second-level cache 202 and/or the third-level cache 204 of the cloud or server 200 can be backfilled to the second-level cache 202 and/or the third-level cache 204 of the cloud or server 200. When an audio file is subsequently needed, it can be read directly in the cloud or server 200 and sent to the vehicle terminal 100 to reduce audio playback latency, thereby bringing a smoother playback experience to the user.

Specifically, when the second-level cache 202 of the cloud or server 200 does not have the audio file, a search is conducted in the cloud or server 200 based on the response text data. After the corresponding response audio file is found, the cloud or server 200 transmits this audio file to the vehicle terminal 100, and the vehicle terminal 100 plays this audio file. The cloud or server 200 also backfills the found corresponding response audio file into the second-level cache 202.

The backfilling can be performed in an asynchronous fashion. That is, the cloud or server 200 can have two processes, one of which may be referred to as a main process. In the main process, after the corresponding response audio file is found, the cloud or server 200 transmits the audio file to the vehicle terminal 100 to cause the vehicle terminal 100 to play the audio file. In the other process, the cloud or server 200 stores the corresponding response audio file into the second-level cache 202 of the cloud or server 200. The two processes will not affect each other, and there are no specific restrictions on the timing or ordering between the two processes.

The backfilling of the third-level cache 204 is similar to the backfilling of the second-level cache 202 described above, and will not be repeated herein.

When the audio file is not present in the second-level cache 202 and/or the third-level cache 204 of the cloud or server 200, the operation of storing the found audio file into the second-level cache 202 and/or the third-level cache 204 of the cloud or server 200 may include the following. When the audio file is not present in the second-level cache 202 of the cloud or server 200, the found audio file is stored into the second-level cache 202 of the cloud or server 200. When the audio file is not present in the third-level cache 204 of the cloud or server 200, the found audio file is stored into the third-level cache 204 of the cloud or server 200. When the audio file is not present in both the second-level cache 202 and the third-level cache 204 of the cloud or server 200, the found audio file is stored into the second-level cache 202 and the third-level cache 204 of the cloud or server 200.

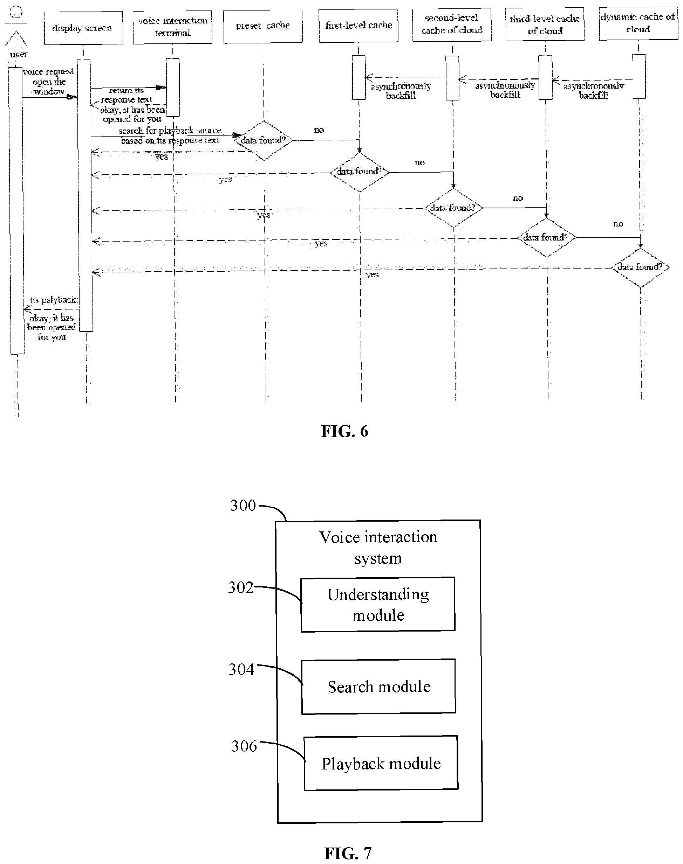

FIG. 6 is a diagram illustrating a scenario of a multi-level cache strategy of a voice interaction method according to the present invention. As shown in FIG. 6, the vehicle terminal 100 receives a voice request from a user, such as "open the window", which is transmitted to the cloud or server 200. The cloud or server 200 obtains the user's wish using natural language understanding. The cloud or server 200 generates and sends an operation instruction and text data to the vehicle terminal 100.

The vehicle terminal 100 receives the operation instruction and controls the vehicle to perform a corresponding operation to assist the user in operating instructions or software application of the vehicle terminal 100. At the same time, the vehicle terminal 100 acquires response text data in response to the user's TTS playback words based on the text data.

The vehicle terminal 100 first searches the preset cache 106 of the vehicle terminal 100 based on the response text data. If the corresponding audio file is found, the vehicle terminal 100 will play the audio file, and the process ends. The content of the audio file for playback is "okay, it has been opened for you".

When there is no hit in the preset cache 106 of the vehicle terminal 100 (that is, the corresponding response audio file is not found therein), a search is then conducted in the first-level cache 108 of the vehicle terminal 100. If the corresponding response audio file is found, the vehicle terminal 100 will play the audio file.

When there is no hit in the first-level cache 108 of the vehicle terminal 100, the cloud or server 200 will be requested so as to retrieve the audio file from the cloud or server 200. A search is first conducted in the second-level high-performance cache of the first cloud or server 208 that stores byte streams corresponding to the response audios. A result, after being retrieved based on the TTS playback words, is returned to the vehicle terminal 100 for playback. After receiving the byte stream data from the cloud or server 200, the vehicle terminal 100 converts the byte stream data into an audio file and stores the audio file into the local first-level dynamic cache 206 while increasing a cache eviction policy.

When there is no hit in the second-level cache 202 of the first cloud or server 208, the third-level high-reliability cache of the first cloud or server 208 is then to be searched. A corresponding response audio file, if found, is returned to the vehicle terminal 100 for playback, and at the same time is asynchronously backfilled to the second-level cache 202 of the first cloud or server 208. The vehicle terminal 100 receives the corresponding response audio file and then backfills it to the first-level cache 108 of the vehicle terminal 100.

When there is no hit in the third-level cache 204 of the first cloud or server 208, a request should be made to the second cloud or server 210 (a third-party service provider) online to obtain a byte stream corresponding to an online audio file. The byte stream is returned to the vehicle terminal 100 for playback, and is asynchronously backfill to the third-level cache 204 and the second-level cache 202 of the first cloud or server 208. The vehicle terminal 100 obtains the corresponding response audio file and then backfills it to the first-level cache 108.

When the above processing is completed, the process ends. The invention employs funnel matching and funnel backfilling for processing, which can enhance the user's playback experience.

Referring to FIG. 7, the present invention provides a voice interaction system 300, which includes:
an understanding module 302 configured to receive a voice request of a user and perform natural language understanding on the voice request to obtain corresponding text data for response;
a searching module 304 configured to obtain response text data based on the text data, and search sequentially a cache of a vehicle terminal 100 and a cache of a cloud or server 200 for a corresponding response audio file based on the response text data; and
a playback module 306 configured to play the found audio file by the vehicle terminal 100.

With the voice interaction system 300, a multi-level cache strategy where a search is first conducted in the vehicle terminal 100 and then in the cloud or server 200 is employed, which enables a faster obtainment of an audio file and reduced audio playback delay. The present invention achieves a balance between low cost and fast audio playback, thereby bringing a smoother playback experience to users.

In particular, the understanding module may be located in the cloud or server 200. For example, the understanding module may be located in a cloud or server 200 server of the vehicle manufacturer, or may be located in a cloud or server 200 server of the third party service provider. In addition, some of the functions of the understanding module may be implemented by the cloud or server 200 server of the vehicle manufacturer and some of the functions may be implemented by the third party service provider. The specific implementation of the understanding module is not limited herein.

The search module may be provided on the vehicle terminal 100, or may be provided on the cloud or server 200. It may also be that some of the functions of the search module are implemented by the vehicle terminal 100, and some of the functions are implemented by the cloud or server 200. The specific implementation of the search module is not limited herein.

The playback module may be provided on the vehicle terminal 100, or may be provided on the cloud or server 200. The location of the playback module is not limited herein.

In a word, a voice interaction system 300 in accordance with the present invention includes an vehicle terminal 100 and a cloud or server 200.

In accordance with the present invention, a computer-readable storage medium is provided, which has stored thereon a computer program that, when executed by a processor, implements any of the embodiments of the voice interaction method.

Specifically, the computer program, when executed by the processor, implements the voice interaction method comprising:
step S 12, receiving a voice request of a user and performing natural language understanding on the voice request to obtain corresponding text data for response;
step S14, obtaining response text data based on the text data, and searching sequentially a cache of an vehicle terminal 100 and a cache of a cloud or server 200 for a corresponding response audio file based on the response text data; and
step S16, playing found audio file by the vehicle terminal 100.

It will be appreciated that the above discussion of the embodiments and the benefits of the voice interaction method also applies to the voice interaction system 300 and the computer-readable storage medium of the present invention, which will not be expanded in detail herein to avoid redundancy.

In summary, in the voice interaction method, voice interaction system 300, and computer-readable storage medium of the embodiments of the present invention, vehicle scenes have higher requirements for TTS response speed, especially for navigation and some safety reminders of dangerous driving behaviors. Therefore, reducing audio playback delay is of importance for user scene perception. Embodiments of the present invention adopt a funnel matching and funnel backfill mechanism to make each level of cache robust while controlling the capacity of each level of cache through the cache eviction policy on each level of the caches to control the storage cost. Unlike the conventional solutions, which merely guarantee service stability in solving high concurrency problems, the TTS online multi-level cache solution aims at solving the problem of allowing the user to have the TTS response faster with less response delay, of enabling faster TTS playback for the user, and of providing higher sound quality, better product experience, and higher performance in human-machine interaction intelligence.

In the description herein, specific features, structures, materials, or characteristics described in connection with terms such as "an embodiment," "some embodiments," "an example," "a specific example," or "some examples," etc. are intended to be comprised in at least one embodiment or example of the present invention. In this specification, references to the above terms are not necessarily intended to refer to the same embodiment or example. Furthermore, the specific features, structures, materials, or characteristics described may be combined in any suitable manner in any one or more embodiments or examples. In addition, a skilled person can appreciate that the various embodiments, examples, and features of the embodiments and examples described herein may be combined with each other, except to the extent that they might be mutually exclusive.

Additionally, the terms "first", "second" and the like are used for illustration purposes only, and are not to be construed as indicating or implying relative importance or implying the number of technical features following these terms. Accordingly, a feature following a term like "first" or "second" may comprise at least one of such features either explicitly or implicitly. In the description herein, unless specifically indicated, the term "a plurality of' or "multiple" means at least two, for example, two or three.

Any process or method operations in the flowcharts or otherwise described herein may be understood as representing modules, segments, or portions of codes which include one or more executable instructions for implementing specific logical functions or steps of the processes. Moreover, it will be appreciated by those skilled in the art that the scope of the preferred embodiments of the present invention includes additional embodiments, in which functions may be performed out of order from that illustrated or discussed herein, but may instead be performed in substantially the same way or in reverse order depending on the functionality involved.

While embodiments of the present invention have been illustrated and described above, it will be appreciated that the embodiments described above are illustrative and are not to be construed as limiting the invention. Variations, modifications, substitutions, and alterations of the embodiments described above may be made by one of ordinary skills in the art without departing from the scope of the present invention.

## Claims

1. A voice interaction method, **characterized by**:
receiving a voice request of a user and performing natural language understanding on the voice request to obtain corresponding text data;
obtaining response text data based on the text data, and searching sequentially a cache of an vehicle terminal and a cache of a server for a corresponding response audio file based on the response text data; and
playing found audio file by the vehicle terminal.

2. The voice interaction method of claim 1, wherein said obtaining response text data based on the text data and searching sequentially a cache of an vehicle terminal and a cache of a server for a corresponding response audio file based on the response text data comprises:
first searching a preset cache of the vehicle terminal based on the response text data; and
then searching a first-level cache of the vehicle terminal when the audio file is not found in the preset cache of the vehicle terminal.

3. The voice interaction method of claim 2, further comprising:
executing a cache eviction policy when the first-level cache of the vehicle terminal stores data for a specified time period.

4. The voice interaction method of claim 2, further comprising:
storing the found audio file into the first-level cache of the vehicle terminal when the audio file is not present in the first-level cache of the vehicle terminal.

5. The voice interaction method of claim 1, wherein said obtaining response text data based on the text data and searching sequentially a cache of a vehicle terminal and a cache of a server for a corresponding response audio file based on the response text data comprises:
first searching a second-level cache of the server when the audio file is not found in the vehicle terminal; and
then searching a third-level cache of the server when the audio file is not found in the second-level cache of the server.

6. The voice interaction method of claim 5, wherein said obtaining response text data based on the text data and searching sequentially a cache of an vehicle terminal and a cache of a server for a corresponding response audio file based on the response text data comprises:
searching a dynamic cache of the server when the audio file is not found in the third-level cache of the server.

7. The voice interaction method of claim 6, wherein the server comprises a first server and a second server, the first server comprises the second-level cache and the third-level cache, and the second server comprises the dynamic cache.

8. The voice interaction method of claim 5, further comprising:
executing a cache eviction policy when the second-level cache of the server stores data for a specified time period.

9. The voice interaction method of claim 5, further comprising:
storing the found audio file into the second-level cache and/or the third-level cache of the server when the audio file is not present in the second-level cache and/or the third-level cache of the server.

10. A voice interaction system, **characterized by**:
an understanding module configured to receive a voice request of a user and perform natural language understanding on the voice request to obtain corresponding text data;
a search module configured to obtain response text data based on the text data, and search sequentially a cache of an vehicle terminal and a cache of a server for a corresponding response audio file based on the response text data; and
a playback module configured to play the found audio file by the vehicle terminal.

11. A computer-readable storage medium having stored thereon a computer program which, when executed by a processor, implements the voice interaction method of any one of claims 1-9.
